# EUROPEAN PATENT APPLICATION

(11) **EP 3 017 744 A1**
(43) Date of publication of application: **11.05.2016**
(21) Application number: 15193520.2
(22) Date of filing: 06.11.2015
(51) Int. Cl.: A47L 13/16, C08J 9/33, B24B 37/22, B24B 37/24, B24D 13/14, B32B 5/02, B32B 5/16, B32B 5/18, B32B 5/24, B32B 7/12, A47L 11/40

(54) **COMPOSITE FOAM PADS COMPRISING MELAMINE AND POLYURETHANE FOAM FOR MOTORIZED FLOOR CLEANING MACHINES**

(30) Priority: 06.11.2014 NL 1041036
(71) Applicant: BOS Polijstmaterialen B.V., 1231 KH Loosedrecht (NL)
(72) Inventor: BOS, Christiaan, 1231 KH Loosdrecht (NL)
(74) Representative: Plaggenborg, Menko Bernard

(57) **Abstract**

The invention relates to a cleaning pad for cleaning a floor surface, said cleaning pad being embodied for coupling to a cleaning machine, comprising a cleaning layer of a mixture of melamine foam flakes and polyurethane foam flakes that are mutually bonded by means of a waterproof hot melt adhesive. The cleaning pad is characterized in that the cleaning layer is provided with a non-woven abrasion fleece for coupling to the cleaning machine and in that the hot melt adhesive is an MDI based composition.

## Description

The present invention relates to a cleaning pad according to the preamble of claim 1.

Such a cleaning pad is known from the art. For example, cleaning pads are known that comprise a mixture of melamine foam flakes and polyurethane foam flakes. A disadvantage of these known pads is the lack of abrasion resistance. Although a mixture of melamine foam flakes and polyurethane foam flakes was developed for improving the lack of abrasion resistance of melamine foam, it was then found out that such composition could not provide a required abrasion resistance. Aa a result, the cleaning pads have to be replaced regularly leading to high costs and low levels of productivity.

The invention now aims at providing an improved cleaning pad of the kind indicated in the preamble.

The invention especially aims at providing an improved cleaning pad of the kind mentioned above that has an improved abrasion resistance.

The invention also aims at providing an improved cleaning pad that has a relatively high stiffness, meaning that the cleaning pad has a stiffness that is higher than the stiffness of a cleaning pad which is made of a melamine foam in one piece.

Furthermore, the invention aims at providing an improved method for cleaning a floor surface.

So as to obtain at least one of the above mentioned goals, according to a first the invention provides a cleaning pad comprising the features of claim 1. This cleaning pad provides the advantage that the abrasion resistance is considerably higher than of the presently available cleaning pads.

The cleaning pas according to the present invention is suitable for cleaning a floor surface. Although the present description mainly refers to cleaning a floor surface, it is to be noted that the cleaning pad according to the present invention is suitable for cleaning other surfaces as well, for example walls.

The term "cleaning pad" relates to materials, in the context of the present invention composite materials, that are moved across a surface to be cleaned such that by the abrasive action of the cleaning pad the surface if cleaned of contamination.

According to a first aspect, the invention therefore relates to a cleaning pad for cleaning a floor surface, said cleaning pad being embodied for coupling to a cleaning machine, comprising a cleaning layer of a mixture of melamine foam flakes and polyurethane foam flakes that are mutually bonded by means of a waterproof hot melt adhesive. This cleaning pad is characterized in that the cleaning layer is provided with a non-woven abrasion fleece for coupling to the cleaning machine and in that the hot melt adhesive is an MDI based composition.

A cleaning pad is preferred wherein the cleaning layer has a density in the range of from 45 to 55 kg/m³. Such range provides a highly increased abrasion resistance. A lower density provides a lower abrasion resistance, whereas a higher density provides a worse cleaning efficiency. Such preferred range of density can be obtained on the one hand by adjusting the composition of melamine foam flakes and polyurethane foam flakes, and on the other hand by varying the amount of hot melt adhesive. A man skilled in the art is easily capable of providing a preferred composition for obtaining a cleaning pad with such preferred characteristics.

It is especially preferred that the non-woven abrasion fleece is comprised substantially of polyamide fibers and polyester fibers. Such provides a high stiffness (also called rigidity in this description) to the cleaning pad, as a consequence of which the cleaning layer suffers from less strain when connected to a cleaning machine and whereby wear of the cleaning pad on unexpected manner is greatly reduced. The wear is several orders of magnitude less if compared with a cleaning pad without such abrasion fleece.

According to a further preferred embodiment, the abrasion fleece is connected to the cleaning layer by means of an MDI based hot melt adhesive, yielding a long lasting connection with the cleaning layer and providing a suitable rigidity at the interface between the cleaning layer and the abrasion fleece, further adding to the abrasion resistance of the cleaning layer.

A cleaning layer having a thickness of from 20 to 25 mm and an abrasion fleece having a thickness of from 6 to 8 mm have shown to be especially suitable. Such embodiment provides an optimum rigidity for use with a cleaning machine for cleaning a floor surface such that abrasion is at a minimum whereas an excellent cleaning result is obtained.

The MDI based hot melt adhesive is preferably a polymeric MDI based composition, yielding an excellent adhesion and also being resistant to water and water based solutions.

A good mixture is obtained when the flakes are not too large. In the present invention, it is preferred for the flakes to be not larger than 8 cm³, preferably not larger than 7 cm³, or even not larger than 6 cm³ . However, a too small dimension is not preferred neither, since such would deteriorate the cleaning capacity. In the latter case a too large amount of adhesive would be required for mutually binding the flakes, increasing the cleaning layer's rigidity too much. The flakes' dimension therefore preferably is at least 0,5 cm³, more preferably at least 1 cm³, and stil more preferably at least 2 cm³ . As a consequence, preference is given to a cleaning pad wherein the flakes each have a volume in the range of from 0.5 to 8 cm³.

So as to obtain an optimum abrasion resistance it is preferred that the ratio of melamine foam flakes to polyurethane foam flakes is in the range of from 80:20.

The density of the polyurethane foam flakes is preferably in the range of from 30 to 35 kg/m³, yielding a cleaning layer that has an optimum resistance to abrasion.

The polyurethane foam flakes may preferably comprise an assortment of colors, for example at least two different colors. Such yields a combination of polyurethane foam flakes with different characteristics. Preferably, a combination of at least three different kinds of polyurethane, more preferably at least four or five, even six or seven or more colors and kinds of polyurethane may be used. The use of more colors also provides the advantage that pollution of the cleaning layer is less visible at first sight but is still clear to a skilled user, such that said user easily recognizes when to change the cleaning pad. Such increases the aesthetic character of the cleaning pad according to the invention.

The melamine foam flakes are preferably kinds of grey melamine foam. The melamine may be recycled melamine. In this case also, the grey color provides the advantage that pollution is not easily visible, whereas a skilled person can easily determine when to replace the cleaning pad.

A further improvement of the cleaning efficiency is obtained when the cleaning layer's surface directed away from the abrasion fleece has a profiled surface. Such is especially the case where the above mentioned range of densities of the cleaning layer is used, providing a surprisingly advantageous result. The degree of profiling is not strongly determinative, but a surface profile that can be easily recognized by a skilled person, identifying that the surface does not just have the usual surface irregularities obtained when producing the cleaning layer but has a specifically provided profiling, is sufficient.

Preferably, the cleaning pad according to the present invention is applied on a cleaning machine wherein a rotating movement across a surface to be cleaned is made. According to such aspect, the invention relates to a cleaning pad that is comprised of mutually connected and mutually aligned disc-shaped layers of a cleaning layer and an abrasion fleece, each having a diameter in the range of from 55 to 990 mm. So as to be able to easily connect the cleaning pad to a cleaning machine or to apply a liquid at the boundary of the cleaning pad and the floor surface, it is preferred for the cleaning pad to be provided with a centrally disposed opening. The liquid can be added from the machine through said opening.

In a similar but alternative way, the invention also relates to a cleaning pad that is comprised of mutually connected and mutually aligned disc-shaped layers of a cleaning layer and an abrasion fleece of substantially rectangular shape with edges having a dimension in the range of from 30 to 660 mm. Such a shape is especially advantageous when an oscillating movement, meaning making a movement to and fro, of the cleaning pad across a surface to be cleaned.

According to another aspect, he invention relates to a method for cleaning a floor surface, comprising the step of coupling to a drive surface of a floor cleaning machine a cleaning pad according to the invention and moving across the floor the cleaning layer of the cleaning pad. Such yields the advantages mentioned above. The cleaning pad may be provided with embodiments as mentioned above independently from each other as well as in combination, and as described in the dependent claims 2 to 12.

Finally, the invention relates to a method comprising the use of water as a cleaning liquid. Surprisingly, it has shown that the use of other cleaning compositions other than water is not required in order to obtain an excellent cleaning of contaminated surfaces.

Hereafter, the invention will be further explained with reference to a drawing. The drawing shows in:
Fig. 1 a schematic top view of a cleaning pad according to the invention,
Fig. 2 a side view of the cleaning pad according to Fig. 1.

In the figures, the same parts are denoted by means of the same reference numbers. However, for ease of understanding the figures, not all parts that are required for a practical embodiment have been shown.

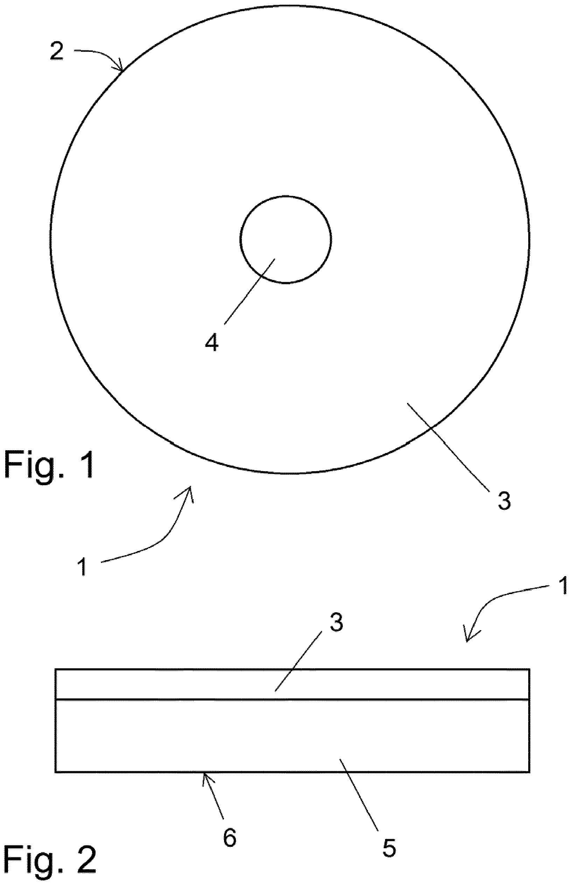

Fig. 1 shows a schematic top view of a cleaning pad 1 according to the invention. The cleaning pad 1 has a substantially circular peripheral edge 2 such that the cleaning pad 1 can be easily connected to a rotating machine for cleaning surfaces, or example floor surfaces, applying such rotating discs. The connection is obtained by means of an abrasion fleece 3 that is connected to a cleaning layer 5, said cleaning layer 5 being provided for cleaning purposes, as shown in Fig. 2.

The cleaning pad 1 has a centrally positioned opening 4. Through said opening 4 a liquid can be fed towards a boundary between the cleaning pad 1 and the floor surface. It has shown that when using the cleaning pad 1 according to the invention the use f water as a cleaning liquid is sufficient for obtaining an excellent cleaning. The composition of the cleaning pad according to the present invention provides a sufficient interaction with the floor surface for removing pollution therefrom.

Fig. 2 shows a side view of the cleaning pad 1 according to the invention and as shown in Fig. 1. The cleaning layer 5 and the abrasion fleece 3 are clearly visible. The cleaning pad 1 can be connected to a cleaning machine by means of said abrasion fleece 3 wherein the surface 6, forming part of the cleaning layer 5, directed away from said abrasion fleece 3, is to be guided across the surface to be cleaned.

The invention is not limited to the embodiments described above and as shown in the drawing. The invention is limited by the appending claims only.

The invention also relates to all combinations of features that have been described independently from each other in the present description.

## Claims

1. A cleaning pad for cleaning a floor surface, said cleaning pad being embodied for coupling to a cleaning machine, comprising a cleaning layer of a mixture of melamine foam flakes and polyurethane foam flakes that are mutually bonded by means of a waterproof hot melt adhesive, **characterized in that** the cleaning layer is provided with a non-woven abrasion fleece for coupling to the cleaning machine and **in that** the hot melt adhesive is an MDI based composition.

2. A cleaning pad according to claim 1, wherein the cleaning layer has a density in the range of from 45 to 55 kg/m³.

3. A cleaning pad according to claim 1, wherein the non-woven abrasion fleece is comprised substantially of polyamide fibers and polyester fibers.

4. A cleaning pad according to claim 1, wherein the abrasion fleece is connected to the cleaning layer by means of an MDI based hot melt adhesive.

5. A cleaning pad according to claim 1, wherein the cleaning layer has a thickness of from 20 to 25 mm and wherein the abrasion fleece has a thickness of from 6 to 8 mm.

6. A cleaning pad according to claim 1, wherein the hot melt adhesive is a polymeric MDI based composition.

7. A cleaning pad according to claim 1, wherein the flakes each have a volume in the range of from 0.5 to 8 cm³.

8. A cleaning pad according to claim 1, wherein the ratio of melamine foam flakes to polyurethane foam flakes is in the range of from 80:20.

9. A cleaning pad according to claim 1, wherein the polyurethane foam flakes have a density in the range of from 30 to 35 kg/m³.

10. A cleaning pad according to claim 1, wherein the cleaning layer's surface directed away from the abrasion fleece has a profiled surface.

11. A cleaning pad according to claim 1, comprised of mutually connected and mutually aligned disc-shaped layers of a cleaning layer and an abrasion fleece, each having a diameter in the range of from 55 to 990 mm, optionally provided with a centrally disposed opening.

12. A cleaning pad according to claim 1, comprised of mutually connected and mutually aligned disc-shaped layers of a cleaning layer and an abrasion fleece of substantially rectangular shape with edges having a dimension in the range of from 30 to 660 mm.

13. A method for cleaning a floor surface, comprising the step of coupling to a drive surface of a floor cleaning machine a cleaning pad according to any of claims 1 to 12 and moving across the floor the cleaning layer of the cleaning pad.

14. A method according to claim 13, comprising the use of water as a cleaning liquid.
